# EUROPEAN PATENT SPECIFICATION

(11) **EP 2 751 404 B1**
(45) Date of publication and mention of the grant of the patent: **09.09.2015**
(21) Application number: 12778124.3
(22) Date of filing: 19.09.2012
(51) Int. Cl.: F01N 3/20

(54) **EXHAUST SYSTEM AND METHOD FOR SELECTIVE CATALYTIC REDUCTION**
ABGASSYSTEM UND VERFAHREN FÜR SELEKTIVE KATALYTISCHE REDUKTION
SYSTÈME D'ÉCHAPPEMENT ET PROCÉDÉ DE RÉDUCTION CATALYTIQUE SÉLECTIVE

(30) Priority: 07.10.2011 FI 20115988
(43) Date of publication of application: 09.07.2014
(73) Proprietor: Wärtsilä Finland Oy, 65380 Vaasa (FI)
(72) Inventor: LUNDIN, Kaj, FI-65100 Vaasa (FI); LIAVÅG, Lars Ola, FI-65230 Vasa (FI)
(74) Representative: Berggren Oy Ab
(86) International application number: PCT/FI2012/050904
(87) International publication number: WO 2013/050651

(56) References cited:
- EP-A2- 2 280 155
- WO-A1-97/00376

## Description

### Technical field of the invention

The present invention relates to an exhaust system for an internal combustion engine according to claim 1. The invention also concerns a method for selective catalytic reduction in accordance with the other independent claim.

### Background of the invention

Nitrogen oxide (NOx) emissions of internal combustion engines in ships and power plants are a growing concern and subject to continuously tightening regulations set by the International Maritime Organization (IMO) and other legislative bodies. To a certain extent, the requirements set by different regulations can be met by means that are directly related to the operation of the engine, such as exhaust gas recirculation, high fuel injection pressures in diesel engines, water injection into the air intake duct etc. However, many engine-related measures for reducing NOx emissions have a negative effect on the fuel efficiency, and they are not adequate for meeting the most stringent emission limits. For ultimate NOx reduction, selective catalytic reduction (SCR) is needed. With the SCR, NOx reductions of up to 90% or even greater can be achieved.

In an SCR system a catalyst material and a reducing agent are used to decompose the NOx that is formed during the combustion. In a typical SCR system, the catalyst is arranged on the surface of a supporting ceramic material that forms a honeycomb structure inside a reactor. On the surface of the catalyst, the NOx reacts with ammonia that is used as the reducing agent and nitrogen and water is formed. In practice, urea is often used instead of ammonia for safety reasons. This applies especially to the marine applications, where leaking ammonia is a serious hazard. Urea is injected into the exhaust gas flow in an aqueous solution. Due to the high temperature of the exhaust gas, water evaporates and the urea molecules break up into ammonia and carbon dioxide.

For effective NOx reduction and minimized usage of urea, as well as for minimum ammonia slip through the SCR system, effective mixing of the urea with the exhaust gas flow is essential. In many prior art solutions, sufficient mixing has been ensured by arranging a relatively long exhaust duct section between the point of urea injection and the catalyst elements. However, this sets limitations for the construction of the exhaust system. Especially in ships, where the available space is limited, it is desirable that the exhaust system requires as little space as possible. Another problem is that the increased thermal efficiency of modern medium- and slow-speed engines leads to low exhaust temperatures. If the catalytic converter is placed far from the engine, low temperature of the exhaust gases may have a negative effect on the functioning of the catalytic converter.

By placing the catalytic converter between the turbine stages in engines with two-stage turbocharging, sufficiently high exhaust temperature for SCR can be achieved. However, for achieving sufficient mixing of the reducing agent and exhaust gases, injection upstream from the turbine of the high-pressure turbocharger is often needed. Urea injection upstream from the turbine has its challenges. The high pressure and temperature of the exhaust gases causes a risk of clogging of the injectors and crystallization of the urea. In addition, the turbine is exposed to erosion if it is hit by liquid droplets.

WO97/00376 shows all the feature of claims 1 and 4.

### Summary of the invention

An object of the present invention is to provide an improved exhaust system for an internal combustion engine. The characterizing features of the exhaust system according to the present invention are given in the characterizing part of claim 1. Another object of the invention is to provide an improved method for selective catalytic reduction. The method according to the invention is characterized by the characterizing part of the other independent claim.

According to the present invention, the exhaust system comprises at least one turbocharger, an exhaust duct for conducting exhaust gases out of the cylinders of the engine, and a catalytic converter that is arranged downstream from the turbine of the turbocharger for selective catalytic reduction. A mixing space is arranged apart from the exhaust duct and in fluid communication with a source of pressurized gas. The exhaust system further comprises means for introducing reducing agent into the mixing space, and the mixing space is in fluid communication with the exhaust duct of the engine for introducing the mixture of the reducing agent and the pressurized gas into the exhaust duct upstream from the turbine of the turbocharger.

In the method according to the invention, reducing agent is mixed with exhaust gases of an internal combustion engine before introducing the exhaust gases into a catalytic converter. The reducing agent is mixed with pressurized gas in a mixing space before being introduced into an exhaust duct of the engine upstream from a turbine of a turbocharger.

By mixing the reducing agent with pressurized gas, the reducing agent evaporates completely before being introduced into the exhaust duct. This helps to avoid corrosion problems in the exhaust duct and the turbocharger. Since the catalytic converter is arranged downstream from the turbine of the turbocharger, the reducing agent is mixed well with the main exhaust gas stream before the exhaust gases enter the catalytic converter.

The mixing space can be a mixing chamber or a mixing duct. According to an embodiment of the invention, the source of pressurized gas is an exhaust manifold of the engine. When exhaust gases of the engine are used as the pressurized gas, it is not necessary to have any control means for regulating the gas flow, but suitable exhaust gas flow into the mixing space can be achieved by appropriate dimensioning of the relevant ducts.

According to another embodiment of the invention, the source of pressurized gas is an intake duct of the engine. When the reducing agent is mixed with clean intake air at moderate temperature, problems with crystallisation and clogging of the reducing agent injector are avoided. As a consequence, a large number of very small injector nozzles can be used, which ensures complete evaporation of the urea even at low load and low intake air temperature.

### Brief description of the drawings

Fig. 1 shows schematically an internal combustion engine with an SCR arrangement.
Fig. 2 shows schematically an internal combustion engine with another SCR arrangement.
Fig. 3 shows schematically an internal combustion engine with still another SCR arrangement.

### Detailed description of the invention

Embodiments of the invention are now described in more detail with reference to the accompanying drawings.

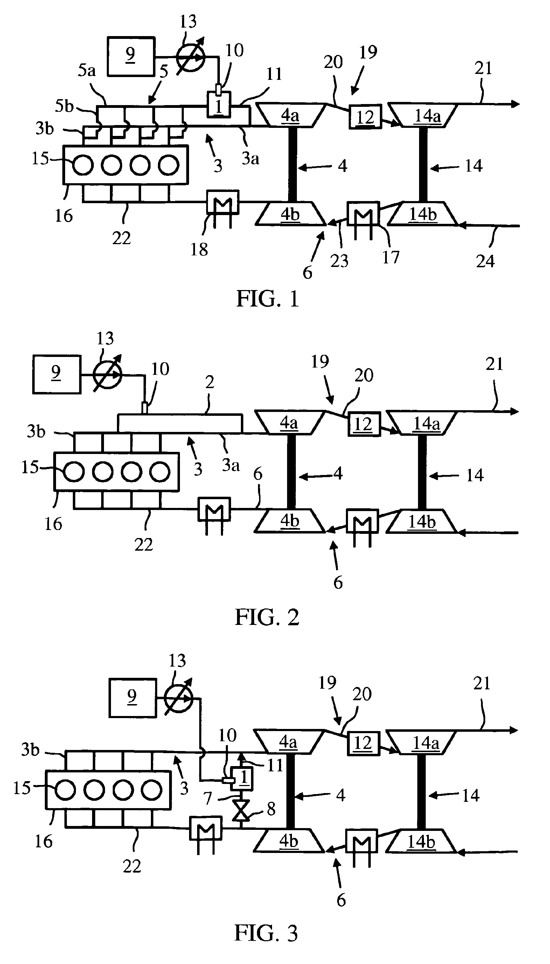

In figure 1 is shown schematically a large internal combustion engine 16 with an SCR system. The engine 16 can be, for instance, a main or an auxiliary engine of a ship or an engine that is used for producing electricity at a power plant. In figure 1 is shown four cylinders 15, but the engine 16 can comprise any reasonable number of cylinders 15 that are arranged, for instance, in line or in a V-configuration. The exhaust system of the engine 16 comprises a high-pressure turbocharger 4 and a low-pressure turbocharger 14 that are connected in series. The turbine 4a of the high-pressure turbocharger 4 is arranged to receive exhaust gases from the engine 16. From the high-pressure turbocharger 4, exhaust gases are conducted to the turbine 14a of the low-pressure turbocharger 14. The exhaust system further comprises an exhaust duct 19 for conducting the exhaust gases out of the cylinders 15 of the engine 16. The exhaust duct 19 comprises an exhaust manifold 3 that connects the cylinders 15 of the engine 16 to the turbine 4a of the high-pressure turbocharger 4, an intermediate exhaust duct 20 for connecting the turbine 4a of the high-pressure turbocharger 4 to the turbine 14a of the low-pressure turbocharger 14, and a low-pressure exhaust duct 21 for conducting the exhaust gases from the turbine 14a of the low-pressure turbocharger 14 out of the engine room. The exhaust manifold 3 comprises a collecting duct 3a and a plurality of branches 3b. One branch 3b is arranged between each cylinder 15 of the engine 16 and the collecting duct 3a for connecting the cylinder 15 to the collecting duct 3a.

The intake air of the engine 16 is pressurized first by the compressor 14b of the low-pressure turbocharger 14. From the low-pressure turbocharger 14, the intake air is conducted to the compressor 4b of the high-pressure turbocharger 4 for further increasing the pressure of the intake air. A first charge-air cooler 17 is arranged between the compressors 14b, 4b of the low-pressure and the high-pressure turbochargers 14, 4. A second charge-air cooler 18 is arranged downstream from the compressor 4b of the high-pressure turbocharger 4. The intake air is introduced into the cylinders 15 of the engine 16 in an intake duct 6. The intake duct 6 comprises a low-pressure intake duct 24 for introducing the intake air into the compressor 14b of the low-pressure turbocharger 14, an intermediate intake duct 23 for conducting the intake air from the compressor 14b of the low-pressure turbocharger 14 to the compressor 4b of the high-pressure turbocharger 4, and an intake manifold 22 that connects the compressor 4b of the high-pressure turbocharger 4 to the cylinders 15 of the engine 16.

The engine 16 is provided with a catalytic converter 12 for selective catalytic reduction (SCR). The catalytic converter 12 is arranged between the turbines 4a, 14a of the high-pressure and the low-pressure turbochargers 4, 14. Between the turbines 4a, 14a of the turbochargers 4, 14, the exhaust temperature is sufficiently high for SCR. Selective catalytic reduction requires reducing agent that is mixed with the exhaust gases before passing the exhaust gases through the catalyst material in the catalytic converter 12. In the embodiment of the figures, the reducing agent is urea that is in form of an aqueous solution. The urea is stored in a reducing agent tank 9. Before introducing the urea into the main exhaust gas stream in the exhaust duct 19, the urea is mixed with pressurized gas in a mixing space that is arranged apart from the exhaust duct 19. In the embodiment of figure 1, the mixing space is a mixing chamber 1. The pressurized gas is exhaust gas of the engine 16. The mixing chamber 1 is therefore in fluid communication with the exhaust manifold 3 of the engine 16. For this purpose, the engine 16 is provided with an exhaust gas delivery duct 5 that comprises a collecting duct 5a and a plurality of branches 5b. The branches 5b of the exhaust gas delivery duct 5 are connected to the branches 3b of the exhaust manifold 3, which works as a source of the pressurized gas. The diameter of the exhaust gas delivery duct 5 is smaller than the diameter of the exhaust manifold 3, and therefore only a small part of the exhaust gases of the engine 16 is passed through the exhaust gas delivery duct 5. An adjustable pump 13 and an injector 10 are used as means for introducing the urea into the mixing chamber 1. In the mixing chamber 1, the urea is mixed with the exhaust gases. The mixing chamber 1 is in flow communication with the exhaust duct 19 also via a delivery duct 11. Through the delivery duct 11, the mixture of the urea and exhaust gases is delivered from the mixing chamber 1 into the exhaust duct 19 upstream from the turbine 4a of the high-pressure turbocharger 4. The point where the mixture is introduced into the main exhaust gas stream is downstream from all the branches 3b of the exhaust manifold 3.

By mixing the urea with exhaust gases, the urea solution evaporates completely before being introduced into the exhaust duct 19. This helps to avoid corrosion problems in the exhaust duct 19 and the high-pressure turbocharger 4. Since the catalytic converter 12 is arranged downstream from the turbine 4b of the high-pressure turbocharger 4, the urea is mixed well with the main exhaust gas stream before the exhaust gases enter the catalytic converter 12.

Figure 2 shows another embodiment of the invention. In this embodiment, the mixing space is a mixing duct 2 instead of a mixing chamber 1. Also in this embodiment, the pressurized gas is exhaust gas of the engine 16. The mixing duct 2 is in flow communication with the exhaust manifold 3 of the engine 16 and parallel with the exhaust manifold 3. Exhaust gas is introduced into the mixing duct 2 from the collecting duct 3a of the exhaust manifold 3. The diameter of the mixing duct 2 is smaller than the diameter of the collecting duct 3a of the exhaust manifold 3, and therefore only a small part of the exhaust gases of the engine 16 is passed through the mixing duct 2. The urea is introduced into the mixing duct 2 by an injector 10. An adjustable pump 13 is used for delivering the urea solution from a reducing agent tank 9. To ensure effective mixing, the point of urea injection in the mixing duct 2 is in the first quarter of the mixing duct 2 in the flow direction of the exhaust gases. The mixing duct 2 is connected to the exhaust duct 19 close to the turbine 4a of the high-pressure turbocharger 4. The connecting point is located upstream from the turbine 4a of the high-pressure turbocharger 4 but downstream from the branches 3a of the exhaust manifold 3.

Figure 3 shows a third embodiment of the invention. In this embodiment, the pressurized gas that is mixed with the reducing agent is intake air of the engine. The mixing space is a mixing chamber 1. The mixing chamber 1 is connected to the intake duct 6 of the engine 16 with an air supply duct 7. The air supply duct 7 is provided with a valve 8 for controlling air flow into the mixing chamber 1. The urea is introduced into the mixing chamber 1 by an injector 10. An adjustable pump 13 is used for delivering the urea solution from a reducing agent tank 9. From the mixing chamber 1, the mixture of the urea and the intake air is introduced into the exhaust duct 19 of the engine 16 upstream from the turbine 4a of the high-pressure turbocharger 4, but downstream from the branches 3b of the exhaust manifold 3.

When the urea is mixed with clean intake air at moderate temperature, problems with crystallisation and clogging of the injector 10 are avoided. As a consequence, a large number of very small injector nozzles can be used, which ensures complete evaporation of the urea even at low load and low intake air temperature. Complete evaporation of the urea helps in avoiding erosion damage to the turbine 4a of the turbocharger 4. Also problems with the wetting of the walls of the exhaust duct 19 can be avoided.

It will be appreciated by a person skilled in the art that the invention is not limited to the embodiments described above, but may vary within the scope of the appended claims. For instance, the invention is applicable also to engines with one-stage turbocharging. In V-engines, where each bank of the engine is provided with its own turbochargers, the exhaust system can comprise separate mixing spaces for each bank of the engine.

## Claims

1. An exhaust system for an internal combustion engine (16), the exhaust system comprising
- at least one turbocharger (4),
- an exhaust duct (19) for conducting exhaust gases out of the cylinders (15) of the engine (16),
- a catalytic converter (12) that is arranged downstream from the turbine (4a) of the turbocharger (4) for selective catalytic reduction,
- a mixing space (1, 2) that is arranged apart from the exhaust duct (19) and in fluid communication with a source of pressurized gas (3, 6), and
- means (10, 13) for introducing reducing agent into the mixing space (1, 2),
the mixing space (1, 2) being in fluid communication with the exhaust duct (19) of the engine (16) for introducing the mixture of the reducing agent and the pressurized gas into the exhaust duct (19) upstream from the turbine (4a) of the turbocharger (4), **characterized in that** the source of pressurized gas (3, 6) is an exhaust manifold (3) or an intake duct (6) of the engine (16).

2. An exhaust system according to claim 1, **characterized in that** the mixing space (1, 2) is a mixing chamber (I).

3. An exhaust system according to claim 1, **characterized in that** the mixing space (1, 2) is a mixing duct (2).

4. A method for selective catalytic reduction, in which method reducing agent is mixed with exhaust gases of an internal combustion engine (16) before introducing the exhaust gases into a catalytic converter (12), the reducing agent being mixed with pressurized gas in a mixing space (1, 2) before being introduced into an exhaust duct (19) of the engine (16) upstream from a turbine (4a) of a turbocharger (4), **characterized in that** the pressurized gas is exhaust gases or intake air of the engine (16).

5. A method according to claim 4, **characterized in that** the reducing agent is mixed with the pressurized gas in a mixing chamber (1).

6. A method according to claim 4 or 5, **characterized in that** the reducing agent is mixed with the pressurized gas in a mixing duct (2).

## Patentansprüche

1. Abgassystem für eine Verbrennungskraftmaschine (16), wobei das Abgassystem Folgendes umfasst:
- wenigstens einen Turbolader (4),
- eine Abgasleitung (19) zum Leiten von Abgasen aus den Zylindern (15) der Kraftmaschine (16),
- einen Katalysator (12), der stromabwärts von der Turbine (4a) des Turboladers (4) angeordnet ist, zur selektiven katalytischen Reduktion,
- einen Mischraum (1, 2), der getrennt von der Abgasleitung (19) und in Fluidverbindung mit einer Quelle (3, 6) von unter Druck gesetztem Gas angeordnet ist, und
- Mittel (10, 13) zum Einleiten eines Reduktionsmittels in den Mischraum (1, 2),
wobei der Mischraum (1, 2) in Fluidverbindung mit der Abgasleitung (19) der Kraftmaschine (16) steht, um das Gemisch des Reduktionsmittels und des unter Druck gesetzten Gases stromaufwärts von der Turbine (4a) des Turboladers (4) in die Abgasleitung (19) einzuleiten,
**dadurch gekennzeichnet, dass** die Quelle (3, 6) von unter Druck gesetztem Gas ein Abgaskrümmer (3) oder eine Ansaugleitung (6) der Kraftmaschine (16) ist.

2. Abgassystem nach Anspruch 1, **dadurch gekennzeichnet, dass** der Mischraum (1, 2) eine Mischkammer (1) ist.

3. Abgassystem nach Anspruch 1, **dadurch gekennzeichnet, dass** der Mischraum (1, 2) eine Mischleitung (2) ist.

4. Verfahren zur selektiven katalytischen Reduktion, wobei in dem Verfahren ein Reduktionsmittel mit Abgasen einer Verbrennungskraftmaschine (16) gemischt wird, bevor die Abgase in einen Katalysator (12) eingeleitet werden, wobei das Reduktionsmittel in einem Mischraum (1, 2) mit unter Druck gesetztem Gas gemischt wird, bevor es stromaufwärts von einer Turbine (4a) eines Turboladers (4) in eine Abgasleitung (19) der Verbrennungskraftmaschine (16) eingeleitet wird, **dadurch gekennzeichnet, dass** das unter Druck gesetzte Gas Abgase oder Ansaugluft der Verbrennungskraftmaschine (16) ist.

5. Verfahren nach Anspruch 4, **dadurch gekennzeichnet, dass** das Reduktionsmittel in einer Mischkammer (1) mit dem unter Druck gesetztem Gas gemischt wird.

6. Verfahren nach Anspruch 4 oder 5, **dadurch gekennzeichnet, dass** das Reduktionsmittel in einer Mischleitung (2) mit dem unter Druck gesetztem Gas gemischt wird.

## Revendications

1. Système d'échappement pour un moteur à combustion interne (16), ledit système d'échappement comprenant
- au moins un turbocompresseur (4),
- un conduit d'échappement (19) pour conduire les gaz d'échappement hors des cylindres (15) du moteur (16),
- un convertisseur catalytique (12) qui est disposé en aval de la turbine (4a) du turbocompresseur (4) pour une réduction catalytique sélective,
- un espace de mélange (1, 2) qui est disposé à part du conduit d'échappement (19) et en communication de fluide avec une source de gaz pressurisé (3, 6), et
- des moyens (10, 13) pour introduire l'agent de réduction dans l'espace de mélange (1, 2),
ledit espace de mélange (1, 2) étant en communication de fluide avec le conduit d'échappement (19) du moteur (16) pour introduire le mélange de l'agent de réduction et du gaz pressurisé dans le conduit d'échappement (19) en amont de la turbine (4a) du turbocompresseur (4),
**caractérisé en ce que** la source de gaz pressurisé (3, 6) est un collecteur d'échappement (3) ou un conduit d'admission (6) du moteur (16).

2. Système d'échappement selon la revendication 1, **caractérisé en ce que** l'espace de mélange (1, 2) est une chambre de mélange (1).

3. Système d'échappement selon la revendication 1 **caractérisé en ce que** l'espace de mélange (1, 2) est un conduit de mélange (2).

4. Procédé de réduction catalytique sélective, dans lequel un agent de réduction est mélangé à des gaz d'échappement d'un moteur à combustion interne (16) avant d'introduire les gaz d'échappement dans un convertisseur catalytique (12), l'agent de réduction étant mélangé au gaz pressurisé dans un espace de mélange (1, 2) avant d'être introduit dans un conduit d'échappement (19) du moteur (16) en amont d'une turbine (4a) d'un turbocompresseur (4) **caractérisé en ce que** le gaz pressurisé est constitué par des gaz d'échappement ou de l'air d'admission du moteur (16).

5. Procédé selon la revendication 4 **caractérisé en ce que** l'agent de réduction est mélangé à du gaz pressurisé dans une chambre de mélange (1).

6. Procédé selon la revendication 4 ou 5 **caractérisé en ce que** l'agent de réduction est mélangé à du gaz pressurisé dans un conduit de mélange (2).
